Europäisches Patentamt

European Patent Office

Office européen des brevets

(11) Numéro de publication: **0 374 046**

**A1**

## (12) DEMANDE DE BREVET EUROPEEN

(21) Numéro de dépôt: 89403466.9

(51) Int. Cl.5: **G02C 5/12**

(22) Date de dépôt: **13.12.89**

(30) Priorité: 15.12.88 FR 8816553
12.10.89 FR 8913321

(43) Date de publication de la demande:
**20.06.90 Bulletin 90/25**

(84) Etats contractants désignés:
**AT CH DE ES GB IT LI SE**

(71) Demandeur: **ESSILOR INTERNATIONAL Cie Générale d'Optique**
**1 Rue Thomas-Edison Echat 902**
**F-94000 Creteil(FR)**

(72) Inventeur: **Pauly, Pascal**
**187 rue des Castellets**
**F-45200 Amilly(FR)**
Inventeur: **Hallot, Christian**
**17 rue Pasteur**
**F-55100 Belleville sur Meuse(FR)**

(74) Mandataire: **CABINET BONNET-THIRION**
**95 Boulevard Beaumarchais**
**F-75003 Paris(FR)**

(54) **Monture de lunettes.**

(57) Monture de lunettes à plaquettes nasales mobiles.

Selon un mode de réalisation possible, les plaquettes nasales réunies par un support (17) sont solidaires d'un coulisseau (18) monté mobile à l'encontre d'un ressort (20) dans un boîtier (22) fixé au pont (14) de la monture.

L'invention permet d'éviter des contusions en cas de choc, ainsi que la déformation du support des plaquettes nasales.

FIG.2

EP 0 374 046 A1

### Monture de lunettes

L'invention se rapporte à une nouvelle monture de lunettes et concerne plus particulièrement un perfectionnement limitant les risques de contusion et de déformation du support nasal en cas de choc.

On connaît des montures de lunettes munies de plaquettes nasales qui sont de petites pièces convexes, de préférence articulées à leur support et positionnées sous le pont reliant les deux "cercles" des verres, pour entrer en contact avec le nez. Les deux plaquettes sont conformées pour épouser autant que faire se peut, la forme du nez et donc pour augmenter la surface par laquelle les lunettes prennent appui sur celui-ci. Les lunettes sont ainsi plus stables et plus agréables à porter mais, en cas de choc, c'est, malgré tout, à ce niveau que les contusions se produisent le plus fréquemment, associées à une déformation intempestive du support des plaquettes nasales.

L'idée de base de l'invention consiste à réaliser un équipage mobile susceptible de se déplacer dans une direction perpendiculaire à celle du pont reliant les deux "cercles" et incluant au moins une plaquette nasale.

Dans cet esprit, l'invention concerne essentiellement une monture de lunettes comportant des plaquettes nasales, caractérisée en ce qu'un support de plaquette nasale est fixé à un coulisseau monté mobile dans un logement aménagé au niveau dudit pont, un ressort étant logé dans ledit logement pour solliciter ledit coulisseau vers l'extérieur dudit logement.

Parmi les montures connues, certaines ont des plaquettes nasales jumelées, c'est-à-dire réunies entre elles à leur partie supérieure ou assemblées, de préférence articulées, à un support en forme générale de U renversé. C'est plus particulièrement à des montures de ce genre que s'applique l'invention. Dans ce cas, ce sont les deux plaquettes nasales jumelées qui sont montées sur un même coulisseau précité.

De manière avantageuse, l'invention s'applique indifféremment aux montures de lunettes réalisées en métal ou en matière plastique.

L'invention sera mieux comprise et d'autres avantages de celle-ci apparaîtront plus clairement à la lumière de la description qui va suivre de plusieurs modes de réalisation de lunettes conforme à son principe, donnée uniquement à titre d'exemple et faite en référence aux dessins non limitatifs annexés dans lesquels:

- la figure 1 est une vue partielle d'une monture de lunettes conforme à l'invention;
- la figure 2 est une vue en perspective éclatée du mécanisme de la figure 1, conforme à l'invention;
- les figures 3a et 3b sont des variantes du coulisseau de la figure 2;
- la figure 4 est une vue analogue à la figure 1 illustrant une autre variante;
- la figure 5 représente la même variante que celle de la figure 4, mais montée sur un autre type de monture;
- la figure 6 est une vue analogue à la figure 2 montrant les éléments de la variante des figures 4 et 5; et
- la figure 7 est une vue en perspective éclatée d'un autre mode de réalisation d'un mécanisme amortisseur portant le support de plaquette nasale.

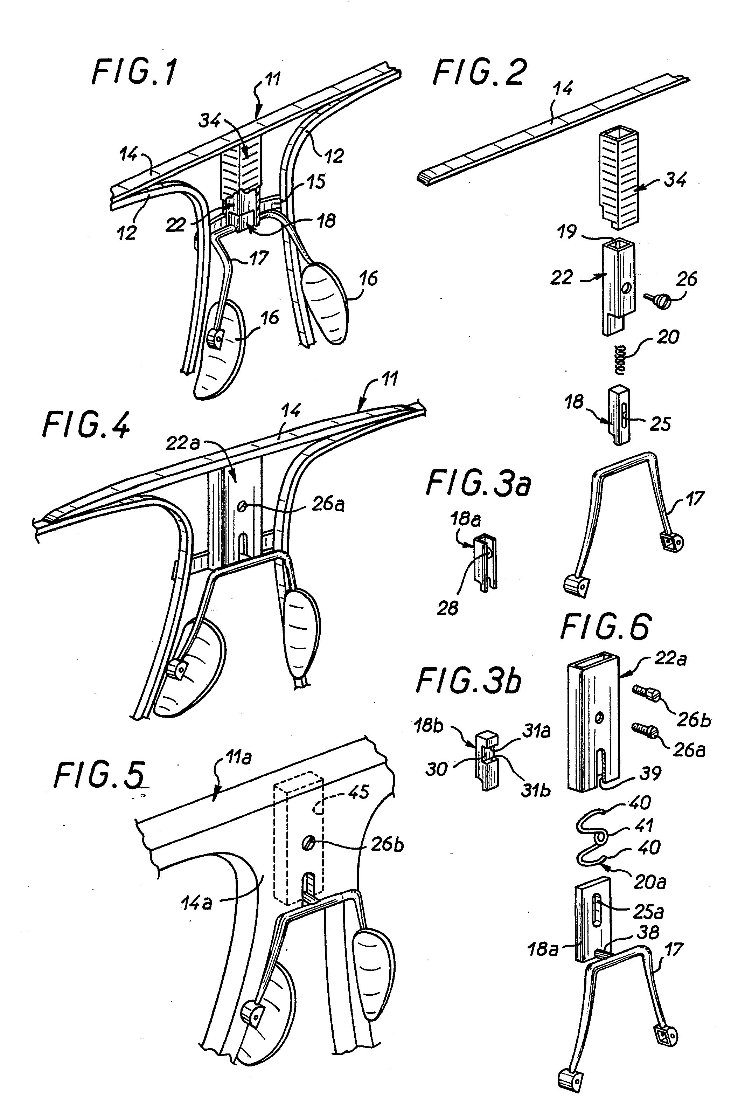

En se référant plus particulièrement aux figures 1 et 2, on reconnaît la partie centrale d'une monture de lunettes 11 de type métallique, comportant deux "cercles" 12 pour les verres, réunis par un double pont constitué de deux barrettes métalliques rectilignes, respectivement appelées un pont supérieur 14 et un pont inférieur 15, ce dernier étant situé le plus près du nez. La monture comporte en outre deux plaquettes nasales 16 articulées à un support 17, ici métallique, et en forme générale de U renversé.

Selon l'invention, ledit support 17 est fixé, ici soudé, à la partie inférieure d'un coulisseau 18 monté mobile dans un logement 19 aménagé au niveau du double pont 14, 15 et un ressort 20 est situé dans ce logement pour solliciter le coulisseau vers l'extérieur dudit logement, c'est-à-dire ici vers le bas, en direction du nez. Dans l'exemple représenté, ledit logement 19 est défini par l'espace interne d'un boîtier 22, ici en forme de tube à section carrée. Ce boîtier abrite le ressort et le coulisseau 18; il est solidaire du double pont, c'est-à-dire ici soudé entre ledit pont supérieur 14 et ledit pont inférieur 15. L'extrémité supérieure du boîtier 22 est soudée sous la barrette constituant le pont supérieur 14, laquelle constitue donc le point d'appui du ressort 20. Ce dernier est ici un ressort hélicoïdal classique.

Selon l'exemple de la figure 2, le coulisseau comporte une lumière longitudinale 25 tandis qu'un organe de blocage tel que par exemple une vis 26 fixée dans la paroi dudit boîtier, fait saillie dans la lumière longitudinale 25. Le débattement du coulisseau à l'intérieur du boîtier est donc ainsi limité de façon simple par la coopération de la lumière 25 et de la vis 26.

Comme le montre la figure 3a, le coulisseau 18a peut être défini dans un profilé en U formant une rainure à l'intérieur de laquelle est fixée au moins une butée, par exemple sous la forme d'une bille 28 soudée à l'intérieur dudit profilé. Comme précédemment, l'organe de blocage est constitué par une vis 26.

Selon encore une autre variante possible (figure 3b) le coulisseau 18b comporte un évidement latéral 30 sous forme d'une rainure transversale définissant deux butées 31a, 31b, opposées, coopérant avec la vis 26 qui fait saillie dans ledit évidement.

Dans tous les exemples précédents, le boîtier 22 est de préférence recouvert d'une gaine tubulaire 34 en caoutchouc ou matériau élastomère analogue.

La variante des figures 4 à 6 présente l'avantage de pouvoir s'adapter aussi bien à une monture métallique 11 semblable à celle de la figure 1 (voir figure 4) qu'à une monture en matière plastique 11a (voir figure 5) dans laquelle le pont 14a, massif et d'une seule pièce, est venu de moulage avec les "cercles".

Pour ce qui concerne le mécanisme lui-même, on retrouve un boîtier 22a, un ressort 20a et un coulisseau 18a muni d'une lumière 25a coopérant avec une vis 26a ou 26b fixée dans la paroi du boîtier 22a. Le support 17 des plaquettes nasales est soudé à la partie inférieure de l'équipage mobile, par l'intermédiaire d'une petite tige 38 engagée dans une fenêtre 39 du boîtier, ouverte à sa partie inférieure. Pour que le boîtier et le coulisseau soient plus plats, le ressort 20a peut avoir la forme représentée à la figure 6. Il est constitué principalement de deux branches métalliques 40, chacune en épingle à cheveux, réunies de façon à définir une sorte de M. Les deux branches sont ici réunies par au moins une spire plate 41.

Dans le cas de la figure 5, le boîtier est monté dans le pont en matière plastique 14a. Pour ce faire, un évidement 45, ouvert à sa partie inférieure, est défini dans le pont. La forme et les dimensions de cet évidement correspondent à celles du boîtier 22a. Ce dernier y est fixé par la vis 26b formant organe de blocage. La tête de cette vis comporte avantageusement une partie cylindrique non filetée qui vient se loger dans un trou correspondant pratiqué dans le pont en matière plastique. La vis 26b assure donc une double fonction.

En position normale, l'équipage mobile ressort au maximum du boîtier 22, en direction du nez. Les plaquettes nasales 16 reposent sur ce dernier. En cas de choc sur la monture, celle-ci peut s'abaisser en direction du nez, mais le choc est alors amorti en raison du mouvement relatif entre le pont et le coulisseau portant le support des plaquettes de nez; ce mouvement s'effectue en comprimant le ressort 20.

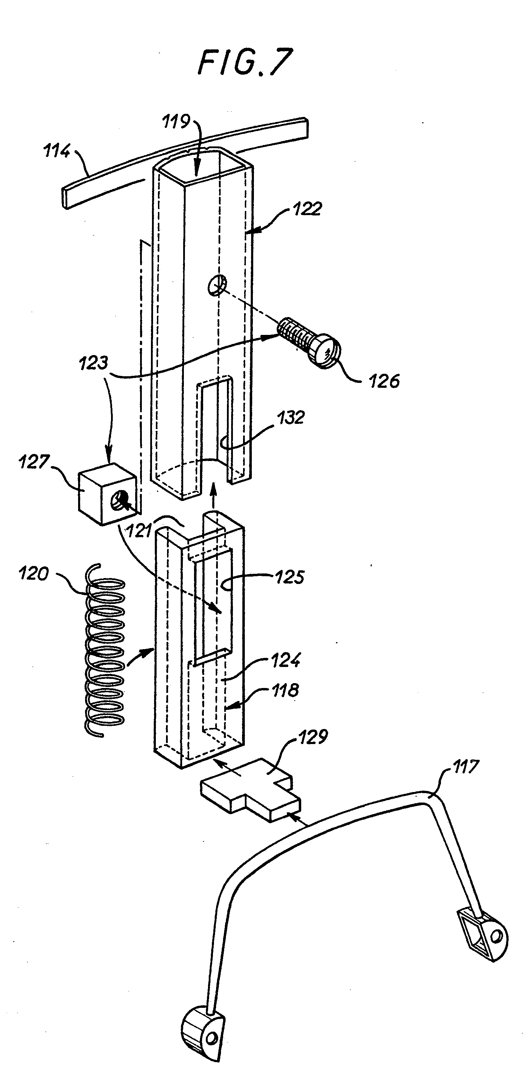

Sur la figure 7, la monture de lunettes n'est pas représentée, sinon par un pont 114, métallique reliant les "cercles" de ladite monture et sur lequel est soudé, sensiblement perpendiculairement, un boîtier 122 tubulaire à l'intérieur duquel est défini un logement 119 renfermant notamment un coulisseau 118 à l'extrémité inférieure duquel est fixé un support 117 de plaquette(s) nasale(s). Dans l'exemple, le support 117 a une forme d'étrier de façon à porter deux plaquettes nasales non représentées. Le boîtier 122 abrite aussi un ressort 120 monté de façon à pouvoir solliciter le coulisseau vers l'extérieur dudit logement 119. Plus particulièrement, le coulisseau 118 fait saillie à l'extrémité inférieure, ouverte, du boîtier 122 et le ressort 120 le sollicite vers l'extérieur du logement.

Le coulisseau 118 est conformé de façon à comporter un espace 121 ouvert longitudinalement et le ressort 120 est logé dans cet espace. Il s'agit d'un ressort hélicoïdal qui prend appui par ses deux extrémités entre une butée 123 fixée au boîtier 122 et une plaquette 129 ou analogue fixée à l'extrémité inférieure du coulisseau 118, c'est-à-dire, celle qui fait saillie à l'extérieur dudit logement 119. Plus précisément la plaquette 129 est soudée à l'extrémité inférieure du coulisseau et le support 117 de plaquette nasale est lui-même soudé à la plaquette 129. Une échancrure 132 est pratiquée dans la paroi du boîtier 122 à partir de l'extrémité inférieure de celui-ci et la plaquette 129 est conformée de façon à être guidée en coulissement dans cette échancrure.

Le coulisseau 118 est essentiellement constitué par un tronçon rectiligne à profil en U. La section interne transversale du logement 119 est de forme et dimension correspondant à celles du tronçon rectiligne constituant le coulisseau 118. Ce dernier comporte en outre une lumière rectiligne 125 pratiquée dans la face de base 124 du tronçon à profil en U de sorte que la butée 123 fixée dans la paroi voisine du boîtier se trouve engagée dans la lumière 125 pour constituer l'autre appui du ressort 120. La butée 123 est constituée par une vis 126 et un écrou 127 montés au travers de la paroi du boîtier 122. L'écrou 127 est engagé dans l'espace ouvert 121 du coulisseau au travers de la lumière 125. Comme représenté, l'écrou a avantageusement la forme d'un cube ou d'un parallélépipède rectangle, pour un meilleur guidage du coulisseau. La forme du coulisseau permet ainsi de loger facilement un ressort hélicoïdal dans ledit boîtier.

L'agencement qui vient d'être décrit permet d'utiliser un ressort hélicoïdal plus long, toutes choses égales par ailleurs et par conséquent travaillant dans des conditions plus favorables. La fiabilité du dispositif en est ainsi augmentée.

**Revendications**

1- Monture de lunettes comportant des plaquettes nasales (16), caractérisée en ce qu'un support (17) de plaquette nasale est fixé à un coulisseau (18) monté mobile dans un logement (19) aménagé au niveau d'un pont, un ressort (20) étant logé dans ledit logement pour solliciter ledit coulisseau vers l'extérieur dudit logement.

2- Monture de lunettes selon la revendication 1, caractérisée en ce que ledit logement (19) est défini à l'intérieur d'un boîtier (22) abritant ledit ressort et ledit coulisseau, ce boîtier étant solidaire dudit pont (14, 15).

3- Monture de lunettes selon la revendication 2, caractérisée en ce que ledit coulisseau comporte une lumière longitudinale (25) et qu'un organe de blocage tel que par exemple une vis (26) fixée dans la paroi dudit boîtier, fait saillie dans cette lumière.

4- Monture de lunettes selon la revendication 2, caractérisée en ce que ledit coulisseau (18a) est défini dans un profilé en U formant une rainure à l'intérieur de laquelle est fixée au moins une butée, par exemple sous la forme d'une bille (28) soudée à l'intérieur dudit profilé et en ce qu'un organe de blocage, comme par exemple une vis, fixée dans la paroi dudit boîtier, fait saillie dans ladite rainure.

5- Monture de lunettes selon la revendication 2, caractérisée en ce que ledit coulisseau (18b) comporte un évidement latéral (30) définissant deux butées opposées et en ce qu'un organe de blocage, comme par exemple une vis fixée dans la paroi dudit boîtier, fait saillie dans ledit évidement.

6- Monture de lunettes selon l'une des revendications 2 à 5, du type comportant un pont métallique (14, 15), caractérisée en ce que ledit boîtier (22) est fixé, de préférence soudé, à ce pont.

7- Monture de lunettes selon la revendication 6, dans laquelle ledit pont métallique comporte deux barrettes sensiblement parallèles caractérisée en ce que ledit boîtier est soudé entre ces deux barrettes.

8- Monture de lunettes selon l'une des revendications 6 ou 7, caractérisée en ce que ledit boîtier (22) est recouvert d'une gaine tubulaire (34) en caoutchouc ou matériau élastomère analogue.

9- Monture de lunettes selon l'une des revendications 2 à 5, dans laquelle ledit pont est en matière plastique, caractérisée en ce qu'un évidement (45) ouvert à sa partie inférieure est ménagé dans ledit pont, en ce que la forme et les dimensions de cet évidement correspondent à celles dudit boîtier (22a), et en ce que ledit boîtier est logé et fixé dans cet évidement.

10- Monture de lunettes selon la revendication 9, caractérisée en ce que l'organe de blocage (26a, 26b) précité est constitué par une vis dont la tête vient se loger dans un trou correspondant dudit pont en matière plastique, pour immobiliser ledit boîtier dans ledit évidement.

11- Monture de lunettes selon l'une des revendications 2 à 10, caractérisée en ce que ledit boîtier étant relativement plat, ledit ressort (20a) comporte deux branches métalliques (40), par exemple en épingle à cheveux, de préférence réunies par au moins une spire plate (41).

12- Monture de lunettes selon l'une des revendications 1 à 3 et 6 à 10, comprenant notamment un support (117) de plaquette nasale fixé à un coulisseau (118) monté mobile dans un logement (119) défini dans un boîtier (122) et un ressort (120) pour solliciter ledit coulisseau vers l'extérieur dudit logement, caractérisée en ce que ledit coulisseau (118) est conformé de façon à comporter un espace (121) ouvert longitudinalement et en ce que ledit ressort est logé dans cet espace.

13- Monture de lunettes selon la revendication 12, caractérisée en ce que ledit coulisseau est essentiellement constitué par un tronçon rectiligne à profil en U monté dans un boîtier (122) tubulaire, de section interne correspondante.

14- Monture de lunettes selon la revendication 13, caractérisée en ce qu'une lumière (125) est pratiquée dans la face de base (124) dudit tronçon, en ce qu'une butée (123) fixée dans la paroi voisine dudit boîtier est engagée dans cette lumière et en ce que ledit ressort (120) est monté en compression entre cette butée et une plaquette (129) ou analogue fixée à l'extrémité dudit coulisseau qui fait saillie à l'extérieur dudit logement.

15- Monture de lunettes selon la revendication 14, caractérisée en ce que ledit support (117) de plaquette nasale est fixé à cette plaquette (129).

16- Monture de lunettes selon la revendication 14 ou 15, caractérisée en ce qu'une échancrure (132) est pratiquée dans la paroi dudit boîtier à partir d'une extrémité de celui-ci, ladite plaquette coulissant dans cette échancrure.

17- Monture de lunettes selon l'une des revendications 14 à 16, caractérisée en ce que ladite butée (123) est constituée par une vis (126) et un écrou (127) montés au travers de la paroi dudit boîtier, en ce que ledit écrou est engagé dans l'espace ouvert (121) du coulisseau au travers de ladite lumière (125) et en ce que ledit ressort prend appui sur cet écrou.

FIG.1

FIG.2

FIG.4

FIG.3a

FIG.5

FIG.3b

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | BE-A- 671 535 (N. TURATI) <br> * Pages 2-3 * <br> --- | 1 | G 02 C 5/12 |
| A | US-A-4 280 758 (T.R. FLADER) <br> * Colonne 3, lignes 8-68; colonne 4, lignes 1-58 * <br> --- | 1 | |
| A | EP-A-0 262 020 (ESSILOR INTERNATIONAL) <br> --- | | |
| A | GB-A-2 123 976 (R. ENGELHARDT NOMINEES) <br> ----- | | |

**DOMAINES TECHNIQUES RECHERCHES (Int. Cl.5)**

G 02 C 5/12

**Le présent rapport a été établi pour toutes les revendications**

| Lieu de la recherche | Date d'achèvement de la recherche | Examinateur |
|---|---|---|
| LA HAYE | 01-03-1990 | CALLEWAERT-HAEZEBROUCK H |